# EUROPEAN PATENT SPECIFICATION

(11) **EP 3 225 495 B1**
(45) Date of publication and mention of the grant of the patent: **04.09.2019**
(21) Application number: 14907131.8
(22) Date of filing: 28.11.2014
(51) Int. Cl.: B61D 27/00, B60H 1/00, B61D 37/00

(54) **RAILWAY VEHICLE WITH CONNECTION DUCT, AND METHOD FOR AFFIXING CONNECTION DUCT**
SCHIENENFAHRZEUG MIT ANSCHLUSSKANAL UND VERFAHREN ZUR BEFESTIGUNG DES ANSCHLUSSKANALS
VÉHICULE FERROVIAIRE ÉQUIPÉ DE CONDUIT DE CONNEXION, ET PROCÉDÉ DE FIXATION DE CONDUIT DE CONNEXION

(43) Date of publication of application: 04.10.2017
(73) Proprietor: Hitachi, Ltd., Tokyo 100-8280 (JP)
(72) Inventor: HAYASHI, Tomoo, Tokyo 100-8280 (JP); TSUKAMOTO, Suguru, Tokyo 100-8280 (JP); MIYAKAWA, Jun, Tokyo 100-8280 (JP); KAWASAKI, Ryo, Tokyo 100-8280 (JP)
(74) Representative: Mewburn Ellis LLP
(86) International application number: PCT/JP2014/081552
(87) International publication number: WO 2016/084227

(56) References cited:
- EP-A1- 2 476 599
- DE-A1- 2 501 065
- JP-A- S5 657 508
- US-A- 2 073 744
- US-A- 2 367 276
- US-A1- 2003 116 213

## Description

### Technical Field

The present invention relates to a railway vehicle including a connection duct for connecting between a cooking equipment module including cooking appliances and an air conditioner, and particularly suitable to be applied to a structure and an attachment method which absorbs dimensional tolerances in attachment of the connection duct when it is difficult to secure a sufficient work space for attaching the connection duct.

### Background Art

In general, as a dimension in a longitudinal (rail) direction of a railway vehicle is larger than a dimension in a width (sleeper) direction, a conditioned air duct is provided along the longitudinal direction of the railway vehicle for supplying conditioned air in which temperature and humidity are conditioned by an air conditioner to respective parts of the railway vehicle.

A structure body which is a hexahedron structure forming the railway vehicle is manufactured by bonding an extrusion material or a stainless steel plate material by welding or the like, therefore, it is difficult to obtain high dimensional accuracy due to effects of distortion and the like caused by high heat input at the time of welding. Accordingly, tolerances tend to be generated in intervals of mounting seats for fixing the conditioned air duct to the structure body, and a connecting part of conditioned air ducts connected in series in the longitudinal direction of the railway vehicle needs to have a function of preventing leakage of conditioned air and a mechanism capable of absorbing dimensional tolerances.

In Patent Literature 1, a duct structure including a connecting part having good workability at the time of connecting a duct and capable of maintaining airtightness in a connecting portion is disclosed. Patent Literature 1 discloses: openings at ends of air conditioning ducts formed of heat insulating boards to have square cross sections are allowed to face each other, and a band-shaped bonding tape for bonding the ends of the air conditioning ducts to each other is wound around the entire circumference of outer peripheral surfaces of the ends of both facing air conditioning ducts. A band-shaped connecting frame which is shorter than the entire circumference of the outer peripheral surfaces of the air conditioning ducts and stiffer than the air conditioning ducts is bonded to a winding part of the bonding tape, and the air conditioning ducts are wound by an exterior tape while covering the connecting frame and the bonding tape.

### Citation List

### Patent Literature

Patent Literature 1: JP-A-2005-324580

Document US 2 367 276 A discloses a railway vehicle including a connection duct comprising: an air conditioner placed on a roof structure body of the railway vehicle; a cooking equipment module having various kinds of cooking appliances and provided inside the railway vehicle below the air conditioner; and a connection duct connecting between an opening provided on the roof structure body just under the air conditioner and a module duct provided at an upper end of the cooking equipment module.

### Summary of Invention

### Technical Problem

The duct structure disclosed in Patent Literature 1 has a process of laying the bonding tape around the entire circumference of the connecting part of the ducts, which is achieved on the assumption that there is a sufficient space where a worker can perform the work over the entire circumference of the connecting part of the ducts. It is considered that the duct structure disclosed in Patent Literature 1 is effective when the ducts are provided on a ceiling where a relatively enough work space can be secured such as in a passenger cabin in which seats are arranged.

However, a duct including a cooling equipment module having cooking machines, a cooking range and so on provided in a preparation cabin for sales in the vehicle and provided in a height direction for discharging a great deal of heat and water vapor generated from the cooking machines to the outside of the vehicle may be provided in a small space between an end in the height direction of the cooking equipment module and an undersurface of a roof structure body forming the railway vehicle structure body.

Additionally, due to installation work of the duct with respect to a limited small space, there is a case of work environment where duct connection work only in one direction toward the outside in the width direction from a passage provided in the central part in the width (sleeper) direction of the structure body is forced. In the case where the work only in one direction in such work space is forced, it seems extremely difficult to install the duct capable of maintaining airtightness so as to prevent leakage of odors or water vapor caused by cooking from the connecting part of the ducts while absorbing dimensional tolerances of the structure body by applying the duct structure disclosed in Patent Literature 1.

The present invention has been made in view of the above, and an object thereof is to provide a railway vehicle including a connection duct capable of easily maintaining airtightness in a duct connecting part while absorbing dimensional tolerances in the duct connecting part by a duct connection work only in one direction, and a method of fixing the connection duct.

### Solution to Problem

In order to solve such problems, the invention provides a railway vehicle having a connection duct including an air conditioner placed on a roof structure body of the railway vehicle, a cooking equipment module having various kinds of cooking appliances and provided inside the railway vehicle below the air conditioner and a connection duct connecting between an opening provided on the roof structure body just under the air conditioner and a module duct provided at an upper end of the cooking equipment module, in which the connection duct is formed by an upper duct and a lower duct, and the upper duct and the lower duct are connected in a telescopic manner capable of sliding in a height direction.

In order to solve such problems, the invention provides a method of fixing a connection duct provided in a railway vehicle which includes an air conditioner placed on a roof structure body of the railway vehicle, a cooking equipment module having various kinds of cooking appliances and provided inside the railway vehicle below the air conditioner, and a connection duct connecting between an opening provided on the roof structure body just under the air conditioner and a module duct provided at an upper end of the cooking equipment module, in which the connection duct is formed by an upper duct and a lower duct, and the upper duct and the lower duct are connected in a telescopic manner capable of sliding in a height direction, the method including the steps of positioning the connection duct to the module duct, extending the connection duct in the height direction and connecting between the module duct and the opening, fastening a first fastening portion by a fastening work performed from a central part, and fastening a second fastening portion and closing a duct opening by a lid.

### Advantageous Effects of Invention

According to the present invention, it is possible to easily maintaining airtightness in the duct connecting part while absorbing dimensional tolerances in the duct connecting part by the duct connection work only in one direction.

### Brief Description of Drawings

Fig. 1 is a partially-broken perspective view showing the positional relation of cooking equipment modules, an air conditioner and a connection duct connecting between the both according to an embodiment of the present invention.
Fig. 2 is a partially-broken perspective view obtained by enlarging a part near the connection duct according to the embodiment.
Fig. 3 is a partially-broken perspective view of the connection duct according to the embodiment.
Fig. 4 is a cross-sectional view in the longitudinal direction of the connection duct according to the embodiment.
Fig. 5 is a partially-broken perspective view of the connection duct obtained by extending a dimension in a height direction according to the embodiment.
Fig. 6 is a partially-broken perspective view of the connection duct obtained by shortening the dimension in the height direction according to the embodiment.
Fig. 7 is a schematic view showing a work of fixing the connection duct according to the embodiment.

### Description of Embodiments

Hereinafter, an embodiment of the present invention will be explained in detail with reference to the drawings.

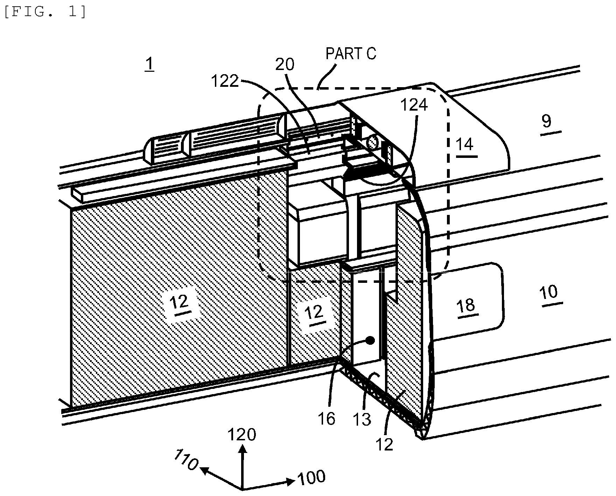

The embodiment of the present invention will be explained with reference to Fig. 1 to Fig. 7. Respective directions used in the following explanation are a longitudinal direction or a rail direction 100 of a railway vehicle or a connection duct, a width direction or a sleeper direction 110 and a height direction 120 of them. Hereinafter, the directions are written merely as the longitudinal direction 100, the width direction 110 and the height direction 120.

Fig. 1 is a partially-broken perspective view showing the positional relation of cooking equipment modules, an air conditioner and a connection duct connecting between the both.

As shown in Fig. 1, a railway vehicle 1 includes a floor (underframe) 13, side structure bodies 10 provided to stand on ends in the width direction 110 of the floor 13, a roof structure body 9 placed on upper ends of the side structure bodies 10 and so on. In the side structure bodies 10, side windows 18, a side opening (not shown) used for getting on and off of passengers and so on are provided. Lower parts of both ends in the longitudinal direction 100 of the railway vehicle 1 are supported by bogies (not shown) capable of rolling on an orbit.

On both ends of the floor 13 inside the vehicle in the width direction of the railway vehicle 1, cooking equipment modules 12 are provided. Then, a passage 16 in which a crew and the like can move is formed at a portion sandwiched by the cooking equipment modules 12 in the central part in the width direction 110 of the floor 13. On an upper surface of the roof structure body 9, an air conditioner 14 for adjusting temperature and humidity by taking air in the passenger cabin and a galley to the inside thereof, discharging air inside the vehicle to the outside of the vehicle and taking fresh air in the outside of the vehicle into the inside of the vehicle is provided.

The cooking equipment module 12 is an apparatus by combining and modularizing cooking appliances, a sink and a storage cabinet and so on for cooking meals to be provided to passengers and the like. The cooking equipment module 12 is assembled after the module divided into plural parts and manufactured by outsourcing is carried in the railway vehicle 1.

The cooking equipment module 12 includes cooking appliances such as an electric stove, an over, an infrared grill, a microwave and a toaster, a water heater, a water cooler, a coffee maker, a refrigerator, a warming cabinet and so on, therefore, heat, odors, oil, moisture, large waste heat and so on are generated from these appliances.

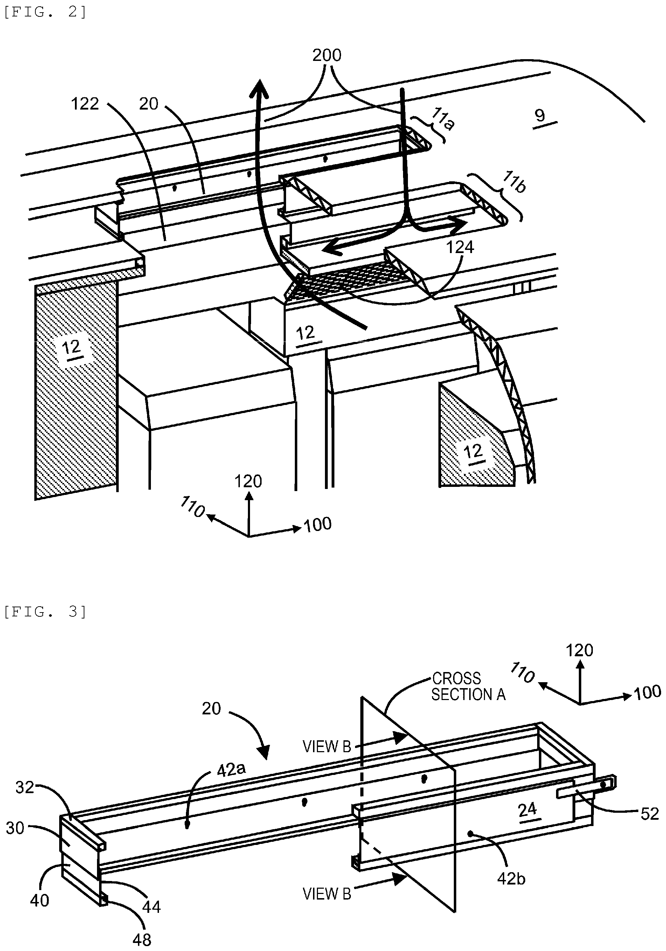

Fig. 2 is a partially-broken perspective view obtained by enlarging a part (part C of Fig. 1) near the connection duct. On the roof structure body 9, an opening 11a for taking the air inside the railway vehicle 1 into the air conditioner 14 and an opening 11b for supplying conditioned air conditioned in the air conditioner 14 to the inside of the vehicle are provided.

A module duct 122 is provided at an upper end of the cooking equipment module 12, and a suction grille 124 is provided at an entrance of the module duct 122. Air sucked by the suction grille 124 is taken into the air conditioner 14 through the connection duct 20 connecting the module duct 122 to a peripheral edge of the opening 11a provided in the roof structure body 9 on the inside of the vehicle after moisture and oil are separated. On the other hand, conditioned air conditioned in the air conditioner 14 is pressure-fed to the conditioned air duct provided along the longitudinal direction 100 on an undersurface of the roof structure body 9 through the opening 11b provided in the roof structure body 9 and supplied to respective parts in the longitudinal direction 100 of the railway vehicle 1.

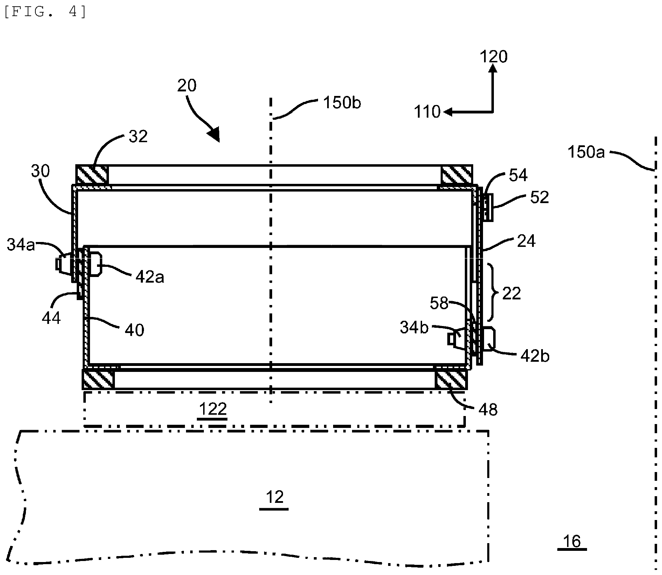

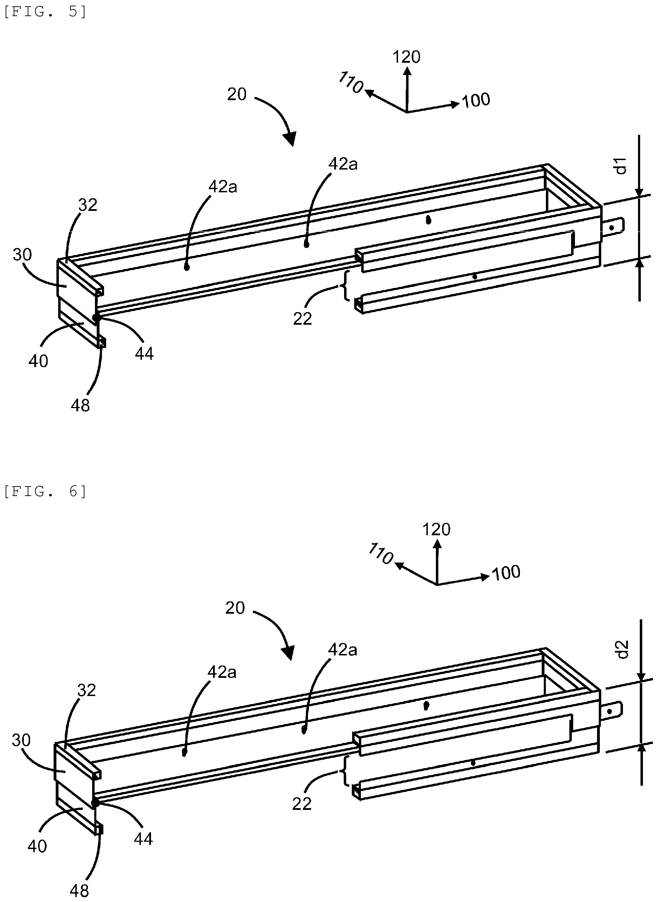

Next, the connection duct 20 will be explained in detail with reference to Fig. 3 to Fig. 6. Fig. 3 is a partially-broken perspective view of the connection duct 20, and Fig. 4 is a cross-sectional view (view of a cross section A of Fig. 3 seen from a view B direction) in the longitudinal direction of the connection duct 20. Fig. 5 is a partially-broken perspective view of the connection duct 20 obtained by extending a dimension in the height direction and Fig. 6 is a partially-broken perspective view of the connection duct 20 obtained by shortening the dimension in the height direction.

As shown in Fig. 3, the connection duct 20 chiefly includes an upper duct 30 and a lower duct 40 which are formed by frame bodies. The upper duct 30 and the lower duct 40 are combined in a telescopic manner to have a structure capable of adjusting the dimension in the height direction 120. A packing 32 is provided on an upper end of the upper duct 30, and the packing 32 abuts on an outer edge of the opening 11a provided on the roof structure body 9 to thereby maintain airtightness of the connection duct 20. Similarly, a packing 48 is provided on a lower end of the upper duct, which abuts on an outer edge of the module duct 122 provided above the cooking equipment module 12 to thereby maintain airtightness of the connection duct 20.

A dimension in the longitudinal direction 100 and a dimension in the width direction 110 of the lower duct 40 are slightly smaller than dimensions of those of the upper duct 30. An upper end of the lower duct 40 enters the inside of the lower end of the upper duct 30, which forms the structure (telescopic structure) capable of sliding in the height direction 120. According to the structure, it is possible to extend the dimension of the connection duct 20 in the height direction as shown in Fig. 5 and to shorten the dimension of the connection duct 20 in the height direction as shown in Fig. 6.

A sealing member 44 for maintaining airtightness is provided on an outer peripheral surface on the upper end of the lower duct 40. The sealing member 44 is pressed by an inner peripheral surface on the lower end of the upper duct 30 and an outer peripheral surface on the upper end of the lower duct 40.

In respective side walls of the upper duct 30 and the lower duct 40 closer to a center 150a in the width direction of a vehicle body, large cutouts having an approximately U-shape are formed. When the connection duct 20 is formed by combining the upper duct 30 with the lower duct 40, a duct opening 22 is formed by cutouts facing each other as a pair on side surfaces of the connection duct 20 closer to the center 150a in the width direction of the vehicle body, namely, on surfaces crossing in the width direction 110. Fig. 5 and Fig. 6 show the duct opening 22 formed by the cutouts.

The duct opening 22 can be closed by a lid 24 and a pressing portion 52 which presses an upper part of an end of the lid 24 in the longitudinal direction 100. An elastic member 54 is provided on a pressing surface of the pressing portion 52 which presses the upper part of the lid 24, which can close an unintended space between the lid 24 and the pressing portion 52.

Moreover, the upper duct 30 and the lower duct 40 are fastened by a nut 34a (see Fig. 4) fixed on a side surface (side wall) of the upper duct 30 farther from the center 150a in the width direction of the vehicle body and a bolt 42a (see Fig. 3 and Fig. 4) penetrating a long hole opening long in the height direction 120 which is provided on a side surface (side wall) of the lower duct 40 farther from the center 150a in the width direction of the vehicle body.

The lower duct 40 is fastened by a nut 34b (see Fig. 4) provided on the side of a center 150b in the width direction of the connection duct on a side surface (side wall) of the lower duct 40 closer to the center 150a in the width direction of the vehicle body and a bolt 42b (see Fig. 3 and Fig. 4) inserted into a bolt hole (not shown) on a lower edge portion of the lid 24 toward the nut 34b from the side of the center 150a in the width direction of the vehicle body. Furthermore, a sealing member 58 (see Fig. 4) is provided at a portion where the lower edge portion of the lid 24 abuts on the lower duct 40, thereby maintaining airtightness.

That is, the side surface (side wall) of the connection duct 20 closer to the center 150a in the width direction of the vehicle body is connected while maintaining airtightness by a fastening portion formed by the bolt 42b and the nut 34b fastening the lower part of the lid 24 and the side wall of the lower duct 40 through the lid 24 and the pressing portion where the pressing portion 52 provided on the side wall of the upper duct 30 presses the upper part of the lid 24.

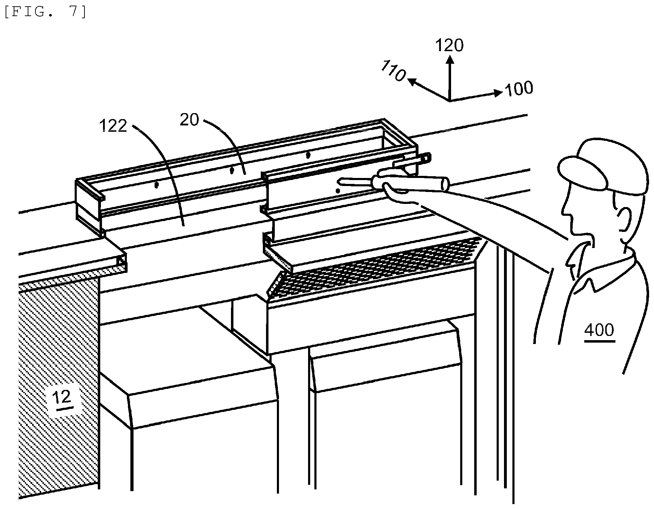

Fig. 7 is a schematic view showing the work of fixing the connection duct. In order to utilize the space inside the railway vehicle to the maximum, a height of the cooking equipment module 12 from an upper surface of the floor 13 is set to be a height slightly lower than a height from the upper surface of the floor 13 to the roof structure body 9. Accordingly, a dimension from an upper end edge of the module duct 122 and an undersurface of an outer peripheral edge of the opening 11b of the roof structure body 9 is small, and the work of installing the connection duct 20 is restricted to only the work in a direction along the width direction 110 performed from the passage 16 side.

Next, a work method of attaching the connection duct 20 will be explained. First, the packing 48 of the lower duct 40 which is a lower end portion of the connection duct 20 in a state where the height dimension is shortened is positioned on an upper end of the module duct 122 provided above the cooking equipment module 12. Then, the height dimension of the connection duct 20 is extended in the height direction 120 (Fig. 5), and the packing 32 of the upper duct 30 as an upper end portion of the connection duct 20 is allowed to abut on an outer peripheral edge of an undersurface of the opening 11a on the roof structure body 9.

Next, the connection duct 20 is extended in the height direction 120 (Fig. 6), a tool is inserted from the duct opening 22 of the connection duct 20 while keeping the state where the packing 32 and the packing 48 are pressed, and the bolts 42a on the side surface (wall surface) of the connection duct 20 farther from the center 150a in the width direction of the vehicle body are fastened. Subsequently, the lid 24 is prepared to close the duct opening 22 on the side surface of the connection duct 20 closer to the center 150a in the width direction of the vehicle body, and the bolt 42b provided along the lower edge of the lid 24 is fastened. After that, the upper part of the end of the lid 24 in the longitudinal direction 100 is pressed by the pressing portion 52 to complete the connection (attachment) work of the connection duct 20.

According to the structure and the attachment method of the connection duct 20 as described above, even when manufacturing tolerances exist between the railway vehicle structure body and the cooking equipment module 12, the tolerances can be absorbed by the mechanism capable of extending the connection duct 20 in the height direction 120, therefore, it is possible to provide the railway vehicle having an air flow path maintaining airtightness in a path from the cooking equipment module 12 to the module duct 122, the connection duct 20 and the opening 11a of the roof structure body 9.

Even in conditions where only the work in one direction from the center 150a in the width direction of the vehicle body toward the end of the vehicle body in the width direction 110 is permitted in addition to the fact that the space including the connection duct 20 is extremely small, the railway vehicle including the air flow path maintaining airtightness can be provided as the bolts 42a which hold the extended state of the connection duct 20 and the bolt 42b which fixes the lid 24 can be fastened.

### Reference Signs List

9...roof structure, 10...side structure body, 12...cooking equipment module, 14...air conditioner, 122...module duct, 124...suction grille, 20...connection duct, 22...opening, 24...lid, 30...upper duct, 30...packing, 34a, 34b...nut, 40...lower duct, 42a, 42b...bolt, 44...sealing member, 48...packing, 52...pressing portion, 54...elastic member, 58...sealing member, 100...longitudinal direction, 110...width direction, 120...height direction, 150a...central line in width direction of vehicle body, 150b...central line in width direction of connection duct

## Claims

1. A railway vehicle including a connection duct comprising:
an air conditioner (14) placed on a roof structure body (9) of the railway vehicle;
a cooking equipment module (12) having various kinds of cooking appliances and provided inside the railway vehicle below the air conditioner; and
the connection duct (20) connecting an opening (11a) provided on the roof structure body (9) just under the air conditioner (14) and a module duct (122) provided at an upper end of the cooking equipment module (12),
**characterized in that** the connection duct (20) is formed by an upper duct (30) and a lower duct (40), and
the upper duct (30) and the lower duct (40) are connected in a telescopic manner capable of sliding in a height direction.

2. The railway vehicle including the connection duct according to claim 1,
wherein approximately U-shaped cutouts are provided on side walls of the upper duct (30) and the lower duct (40) at positions closer to a central part in a width direction of the railway vehicle, and
a duct opening (22) is provided, which is formed by arranging the cutout of the upper duct (30) and the cutout of the lower duct (40) so as to face each other at the time of combining the upper duct (30) and the lower duct (40) in the telescopic manner.

3. The railway vehicle including the connection duct according to claim 2,
wherein a first fastening portion (42a) is provided inside the connection duct (20) on the side walls of the upper duct (30) and the lower duct (40) at positions farther from the central part in the width direction of the railway vehicle,
a second fastening portion (34a) is provided outside the connection duct (20) on the side walls of the upper duct (30) and the lower duct (40) at positions closer to the central part in the width direction of the railway vehicle.

4. The railway vehicle including the connection duct according to claim 3, further comprising:
a lid (24) covering the duct opening (22) on the central part's side in the width direction of the railway vehicle,
wherein the lid (24) closes the duct opening (22) by fixing a lower end of the lid (24) to the connection duct (20) by the second fastening portion.

5. The railway vehicle including the connection duct according to claim 4,
wherein an upper part of an end portion in the longitudinal direction of the lid (24) is pressed by a pressing portion provided in the upper duct (30).

6. A method of fixing a connection duct provided in a railway vehicle according to claims 3 to 5, including the air conditioner (14) placed on a roof structure body (9) of the railway vehicle,
the cooking equipment module (12) having various kinds of cooking appliances and provided inside the railway vehicle below the air conditioner (14), and the connection duct (20) connecting between the opening (11a) provided on the roof structure body (9) just under the air conditioner (14) and the module duct (122) provided at an upper end of the cooking equipment module (12), in which the connection duct (20) is formed by the upper duct (30) and the lower duct (40), and the upper duct (30) and the lower duct (40) are connected in a telescopic manner capable of sliding in a height direction, the method comprising the steps of:
positioning the connection duct (20) to the module duct (122);
extending the connection duct (20) in the height direction and connecting between the module duct (122) and the opening (11a);
the first fastening fastening portion (42a) by a fastening the work performed from central part; and
the second the fastening fastening portion (34a) and closing duct opening (22) by a lid (24)

## Patentansprüche

1. Schienenfahrzeug mit einem Verbindungskanal, umfassend:
ein Klimagerät (14), das auf einem Dachstrukturkörper (9) des Schienenfahrzeugs positioniert ist;
ein Kochgerätemodul (12), das verschiedene Arten von Kochutensilien aufweist und im Inneren des Schienenfahrzeugs unterhalb des Klimageräts vorgesehen ist; und
wobei der Verbindungskanal (20) eine auf dem Dachstrukturkörper (9) direkt unterhalb des Klimageräts (14) vorgesehene Öffnung (11a) und einen an einem oberen Ende des Kochgerätemoduls (12) vorgesehenen Modulkanal (122) verbindet,
**dadurch gekennzeichnet,**
**dass** der Verbindungskanal (20) durch einen oberen Kanal (30) und einen unteren Kanal (40) gebildet ist, und
**dass** der obere Kanal (30) und der untere Kanal (40) in teleskopartiger Weise, die für ein Gleiten in eine Höhenrichtung geeignet ist, miteinander verbunden sind.

2. Schienenfahrzeug mit dem Verbindungskanal gemäß Anspruch 1,
wobei ungefähr U-förmig ausgebildete Ausschnitte auf Seitenwänden des oberen Kanals (30) und des unteren Kanals (40) an zu einem Mittelteil in eine Breitenrichtung des Schienenfahrzeugs näher gelegenen Positionen vorgesehen sind, und
wobei eine Kanalöffnung (22) vorgesehen ist, die durch Anordnen des Ausschnitts des oberen Kanals (30) und des Ausschnitts des unteren Kanals (40) gebildet wird, um zu dem Zeitpunkt einander zugewandt zu sein, in dem der obere Kanal (39) und der untere Kanal (40) teleskopartig kombiniert werden.

3. Schienenfahrzeug mit dem Verbindungskanal gemäß Anspruch 2,
wobei ein erster Befestigungsabschnitt (42a) im Inneren des Verbindungskanals (20) auf den Seitenwänden des oberen Kanals (30) und des unteren Kanals (40) an von dem Mittelteil in die Breitenrichtung des Schienenfahrzeugs weiter entfernten Positionen vorgesehen ist,
wobei ein zweiter Befestigungsabschnitt (34a) außerhalb des Verbindungskanals (20) auf den Seitenwänden des oberen Kanals (30) und des unteren Kanals (40) an zu dem Mittelteil in die Breitenrichtung des Schienenfahrzeugs näher gelegenen Positionen vorgesehen ist.

4. Schienenfahrzeug mit dem Verbindungskanal gemäß Anspruch 3, ferner umfassend:
einen Deckel (24), der die Kanalöffnung (22) auf der Seite des Mittelteils in die Breitenrichtung des Schienenfahrzeugs abdeckt,
wobei der Deckel (24) die Kanalöffnung (22) durch Festlegen eines unteren Endes des Deckels (24) am Verbindungskanal (20) durch den zweiten Befestigungsabschnitt verschließt.

5. Schienenfahrzeug mit dem Verbindungskanal gemäß Anspruch 4,
wobei ein oberer Teil eines Endabschnitts in Längsrichtung des Deckels (24) durch einen im oberen Kanal (30) vorgesehenen Pressabschnitt gepresst wird.

6. Verfahren zur Festlegung eines in einem Schienenfahrzeug vorgesehenen Verbindungskanals gemäß Ansprüchen 3 bis 5, der das auf einem Dachstrukturkörper (9) des Schienenfahrzeugs positionierte Klimagerät (14) umfasst,
wobei das Kochgerätemodul (12) verschiedene Arten von Kochutensilien aufweist und im Inneren des Schienenfahrzeugs unterhalb des Klimageräts (14) vorgesehen ist, und
wobei der Verbindungskanal (20) zwischen der auf dem Dachstrukturkörper (9) vorgesehenen Öffnung (11a) direkt unterhalb des Klimageräts (14) und dem an einem oberen Ende des Kochgerätemoduls (12) vorgesehenen Modulkanal (122) eine Verbindung herstellt, wobei der Verbindungskanal (20) durch den oberen Kanal (30) und den unteren Kanal (40) gebildet ist, und der obere Kanal (30) und der untere Kanal (40) in teleskopartiger Weise, die für ein Gleiten in eine Höhenrichtung geeignet ist, miteinander verbunden sind, wobei das Verfahren die folgenden Schritte umfasst:
Positionieren des Verbindungskanals (20) am Modulkanal (122);
Ausdehnen des Verbindungskanals (20) in die Höhenrichtung und Herstellen einer Verbindung zwischen dem Modulkanal (122) und der Öffnung (11a);
Befestigen des ersten Befestigungsabschnitts (42a) durch einen Befestigungsvorgang, der vom Mittelteil ausgeführt wird; und
Befestigen des zweiten Befestigungsabschnitts (34a) und Verschließen der Kanalöffnung (22) durch einen Deckel (24).

## Revendications

1. Véhicule ferroviaire comprenant un conduit de connexion comprenant :
un climatiseur (14) placé sur un corps de structure de toit (9) du véhicule ferroviaire ;
un module d'équipement de matériel de cuisine (12) ayant différents types d'appareils de cuisson et prévu à l'intérieur du véhicule ferroviaire au-dessous du climatiseur ; et
le conduit de connexion (20) raccordant une ouverture (11a) prévue sur le corps de structure de toit (9) juste au-dessous du climatiseur (14) et un conduit de module (122) prévu au niveau d'une extrémité supérieure du module d'équipement de cuisine (12),
**caractérisé en ce que** le conduit de connexion (20) est formé par un conduit supérieur (30) et un conduit inférieur (40), et
le conduit supérieur (30) et le conduit inférieur (40) sont raccordés d'une manière télescopique pouvant coulisser dans une direction de hauteur.

2. Véhicule ferroviaire comprenant le conduit de connexion selon la revendication 1,
dans lequel des découpes approximativement en forme de U sont prévues sur les parois latérales du conduit supérieur (30) et du conduit inférieur (40) dans des positions plus à proximité d'une partie centrale, dans le sens de la largeur du véhicule ferroviaire, et
on prévoit une ouverture de conduit (22) qui est formée en agençant la découpe du conduit supérieur (30) et la découpe du conduit inférieur (40) afin de se faire face au moment de la combinaison du conduit supérieur (30) et du conduit inférieur (40) d'une manière télescopique.

3. Véhicule ferroviaire comprenant le conduit de connexion selon la revendication 2,
dans lequel une première partie de fixation (42a) est prévue à l'intérieur du conduit de connexion (20) sur les parois latérales du conduit supérieur (30) et du conduit inférieur (40) dans des positions plus éloignées de la partie centrale dans le sens de la largeur du véhicule ferroviaire,
une seconde partie de fixation (34a) est prévue à l'extérieur du conduit de connexion (20) sur les parois latérales du conduit supérieur (30) et du conduit inférieur (40) dans des positions plus proches de la partie centrale dans le sens de la largeur du véhicule ferroviaire.

4. Véhicule ferroviaire comprenant le conduit de connexion selon la revendication 3, comprenant en outre :
un couvercle (24) recouvrant l'ouverture de conduit (22) du côté de la partie centrale dans le sens de la largeur du véhicule ferroviaire,
dans lequel le couvercle (24) ferme l'ouverture de conduit (22) en fixant une extrémité inférieure du couvercle (24) sur le conduit de connexion (20) par la seconde partie de fixation.

5. Véhicule ferroviaire comprenant le conduit de connexion selon la revendication 4,
dans lequel une partie supérieure d'une partie d'extrémité dans la direction longitudinale du couvercle (24) est comprimée par une partie de pression prévue dans le conduit supérieur (30).

6. Procédé pour fixer un conduit de connexion prévu dans un véhicule ferroviaire selon les revendications 3 à 5, comprenant :
le climatiseur (14) placé sur un corps de structure de toit (9) du véhicule ferroviaire,
le module d'équipement de cuisine (12) ayant différents types d'appareils de cuisson et étant prévu à l'intérieur du véhicule ferroviaire au-dessous du climatiseur (14), et
le conduit de connexion (20) se raccordant entre l'ouverture (11a) prévue sur le corps de structure de toit (9) juste au-dessous du climatiseur (14) et le conduit de module (122) prévu sur une extrémité supérieure du module d'équipement de cuisine (12), dans lequel le conduit de connexion (20) est formé par le conduit supérieur (30) et le conduit inférieur (40), et
le conduit supérieur (30) et le conduit inférieur (40) sont raccordés d'une manière télescopique afin de pouvoir coulisser dans le sens de la hauteur, le procédé comprenant les étapes consistant à :
positionner le conduit de connexion (20) sur le conduit de module (122) ;
étendre le conduit de connexion (20) dans le sens de la hauteur et se raccorder entre le conduit de module (122) et l'ouverture (11a) ;
fixer la première partie de fixation (42a) par un travail de fixation réalisé à partir de la partie centrale ; et
fixer la seconde partie de fixation (34a) et fermer l'ouverture de conduit (2) par un couvercle (24).
